(19) Europäisches Patentamt
European Patent Office
Office européen des brevets

(11) Publication number: **0 209 861 B1**

(12) # EUROPEAN PATENT SPECIFICATION

(45) Date of publication of patent specification: **02.05.91** (51) Int. Cl.⁵: **C21B 13/14**

(21) Application number: **86109881.2**

(22) Date of filing: **18.07.86**

(54) **Melt-reductive iron making method from iron ore.**

(30) Priority: **18.07.85 JP 159255/85**
**18.07.85 JP 159254/85**
**18.07.85 JP 159256/85**

(43) Date of publication of application:
**28.01.87 Bulletin 87/05**

(45) Publication of the grant of the patent:
**02.05.91 Bulletin 91/18**

(84) Designated Contracting States:
**DE FR**

(56) References cited:
**EP-A- 0 126 391**
**DE-B- 1 234 749**
**FR-A- 2 257 692**
**US-A- 4 235 425**
**US-A- 4 394 163**

(73) Proprietor: **KABUSHIKI KAISHA KOBE SEIKO SHO**
**3-18 Wakinohama-cho 1-chome Chuo-ku**
**Kobe 651(JP)**

(72) Inventor: **Aoki, Mamoru**
**2-26-16, Yokoo Suma-ku**
**Kobe(JP)**

(74) Representative: **Thomsen, Dieter, Dr.rer.nat.**
**Kaiser-Ludwig-Platz 6**
**W-8000 München 2(DE)**

**EP 0 209 861 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a method of producing pig iron by melt reducing of iron ore using a melt reducing furnace (hereinafter referred to sometimes merely as "melting furnace").

EP 126 391 describes the production of iron from iron ore using an ore reduction reactor and a melt reactor; the reaction gases are worked up and at least partially re-used by cycling and mixing them and mixing them also with fresh gases from the outside; $O_2$ as an oxidizing agent is added by blowing into the melt reactor; furthermore for reduction and partial reforming purposes coal or natural gas is added to the reaction gas of the melt reactor.

As the technique for manufacturing pig iron without using a blast furnace, a so-called direct iron making process is being spotlighted, and there have been developed KR method, COIN method, Kawa-Tetsu method and Sumi-Kin method as small-scale iron manufacturing techniques. These methods require both a preliminary reducing furnace and a melting furnace. As examples of the preliminary reducing furnace, a shaft furnace and a fluidized bed furnace have been considered.

The principle of the direct iron making process is as illustrated in Fig. 2, in which a high-temperature gas "a" evolved in a melting furnace 1 and containing CO as a main component (also containing $CO_2$, $H_2$ and $H_2O$) is fed as both a heat source and a reducing agent to a preliminary reducing furnace 3, while pig iron is placed beforehand in the melting furnace 1 and held in a molten state, then carbon material and oxygen gas (or air) are introduced therein to effect the supply of heat source and reducing gas, and iron ore P reduced partially in the preliminary reducing furnace 3 is charged into the melting furnace, allowing reduction to be finally completed therein, then the product obtained is taken out as pig iron F. When viewed from the molten iron manufacture, the above process has been considered fairly advantageous in point of cost because of using coal as compared with a process utilizing natural gas. At present, however, even such process involves a serious economic drawback. More particularly, as a specially serious drawback, since it is necessary to supply a sufficient energy to the melting furnace with a view to melting reduced iron, such an expensive fuel as anthracite having a reduced ash content or brown coal coke must be used in a considerable amount. And the amount of a reducing gas evolved largely exceeds the amount of gas required in the preliminary reducing furnace. Therefore, studies have been made about effectively utilizing the reducing gas which tends to be excessive. In Japanese Patent Laid-Open Publication No. 222508/84 there are proposed a method of reforming gas provided from a melting furnace and a method of introducing the thus-reformed reducing gas into a preliminary reducing furnace. However, these methods imply the use of an expensive fuel and so the above-mentioned drawback is not overcome. Besides, the heat load induced by post-combustion is so high that it is considered absolutely necessary to use a high grade refractory in the interior of the melting furnace and also at an outlet portion thereof.

However, in order to use the advantages of the direct iron making process another serious problem must be taken into account. It is the clustering problem particularly in the a.m. preliminary reducing furnace 3 mostly at too high or at uncontrolled temperatures.

The object of the invention is to create a method of producing pig iron which method makes advantageous use of the combination of the a.m. two reactors, i.e. the preliminary reducing furnace and the melting furnace, while energy supply and energy balance for both these reactors are optimum combined.

According to the invention this object is solved by the method of the claim, i.e. :

Method of producing pig iron by melt reducing of iron ore, comprising

a. subjecting an iron oxide feedstock in a solid state to a preliminary reduction in a preliminary reducing furnace using a reducing gas which is introduced from a melt-reducing furnace,
b. supplying the iron oxide feedstock after the preliminary reduction to the melt-reducing furnace and melt-reducing it in the presence of a reducing agent,
c. subjecting the reducing gas evolved in the melt-reducing furnace to the action of a gaseous oxidizing agent to allow to burn in the vicinity of an upper surface of the molten iron,
d. subjecting the reducing gas at a high temperature discharged from the melt-reducing furnace to the action of a gaseous reducing agent at a high temperature to allow a partial reforming reaction to take place,
e. introducing the resulting reformed gas into the preliminary reducing furnace,
wherein step d. uses methane as the gaseous reducing agent
and the concentration of unreacted methane in the reformed gas obtained by the partial reforming reaction under action of methane is held at a value in the range of 2% to 13%.

Thus less expensive fuel such as low grade coal poor in energy or a coal having a high content of volatile components can be used. Furthermore the a.m. heat load induced by post-combustion is reduced.

Since the amount of reducing gas evolved by the use of such a fuel may be deficient it is required to lower the amount of coal to such an amount necessary for the reduction of ore in the preliminary reducing furnace, and then to upgrade the reducing gas evolved from the melting furnace into a gas of composition and temperature suitable for the ore reduction.

The reducing gas evolved from the melting furnace is allowed to burn with a gaseous oxidizing agent such as oxygen added into the melting furnace, and the heat of combustion generated is transmitted effectively to an iron bath. Then a high-temperature reducing gas evolved in and discharged from a melting furnace is contacted with a gaseous reducing agent such as natural gas containing methane as a main component or LPG at an outlet portion of the melting furnace body or in an outlet piping, thereby allowing a reforming reaction to take place to obtain reformed gas, which is introduced into a preliminary reducing furnace. Under these conditions not only the sensible heat of the high-temperature reducing gas evolved in the melting furnace is utilized effectively but also the cooling of the reducing gas and improvement in the degree of reduction are attained to thereby reduce or prevent the loss of heat. Furthermore the invention contributes to preventing the deterioration of the refractory provided at the outlet portion of the melting furnace body or in the outlet piping. Additionally, because of the use of a low grade fuel, the amount of the high-temperature reducing gas evolved in the melting furnace is small and thus a contribution is made to the reduction of heat load induced by post-combustion.

In the partial reforming reaction utilizing sensible heat which is allowed to take place on the way to the preliminary reducing furnace, it is not that methane (the gaseous reducing agent such as natural gas containing methane or LPG is herein typified by methane) is reacted sufficiently up to equilibrium composition, even when considered from the standpoint of speed. With lowering of the temperature, the amount of methane reacted becomes smaller. That methane remains unreacted like this rather affords desirable results in the following stage. More particularly, in a preliminary reduction with a coal-based gas composition, a partial reducing reaction is induced within the preliminary reducing furnace such as a shaft furnace because the gas composition is relatively rich in CO, and the generation of heat sometimes results, thus causing clustering which is a fusing phenomenon of iron ore or reduced iron pieces with each other. On the other hand, if methane is contained in the reducing gas introduced into the preliminary reducing furnace, a carbon coating for reduced iron, etc. is performed by a thermal decomposition of the methane, thereby permitting the prevention of clustering. About 2% to 13% of methane based on the amount of the reducing gas suffices for the said carbon coating. The reducing gas may include the other gaseous hydrocarbons and solid carbon sources as well.

Thus, it is very advantageous to incorporate methane in the reducing gas to be introduced into the reducing furnace. Therefore, in the reforming reaction performed by adding heated methane to the high-temperature reducing gas leaving the melting furnace, it is not necessary to reform the total amount of the methane. A partial reaction suffices. It is significant that there remains unreacted methane to meet the methane concentration of about 2% to 13% as mentioned above. The above reforming reaction is performed by utilizing the heat which the gaseous mixture per se possesses, that is, according to a non-external heating system. In the reaction, moreover, since the gaseous mixture per se has a high temperature of 1,200° to 1,550° C, it is not necessary to use a catalytic system; a non-catalytic system suffices. In this case, it is expected that a fine iron powder scattered from the melting furnace will act as a catalyst. Further, a special reaction vessel may be disposed on the way to the preliminary reducing furnace to allow the reaction to proceed rapidly, as previously noted.

The gaseous mixture of the high-temperature reducing gas evolved in the melting furnace and the heated methane, per se has a temperature of 1,200° to 1,550° C as mentioned above and this potential heat permits the reforming reaction as an endothermic reaction to proceed with the result that the temperature of the gaseous mixture drops to a level of 50° to 300° C. Therefore, by introducing the gas into the body of the melting furnace it is made possible to reduce the heat load of the same furnace body.

Further, if a portion of the top gas (discharged gas) from the preliminary reducing furnace is recycled, and, after removal of an oxidizable component contained in the recycle gas, the same gas is mixed into the above reformed reducing gas, then a reducing gas can be obtained which has been cooled and adjusted to appropriate temperature and degree of reduction.

The reducing gas thus obtained may be introduced alone into the preliminary reducing furnace. Alternatively, before its injection into the preliminary reducing furnace (e.g. shaft furnace) it may be cooled and adjusted to temperature and degree of reduction suitable for the injection by incorporating preheated methane therein at an appropriate ratio. A heater or a cooler may be provided auxiliarily on the way to the preliminary reducing furnace whereby the injection temperature can be adjusted more accurately. The above method of introducing the reducing gas after incorporating therein a gaseous reducing agent (preheated methane) is very advantageous in that carbon coating to iron ore is effected by the decomposition of methane; and the result is the prevention of clustering.

In practising the present invention the reformed reducing gas is introduced into the preliminary reducing furnace from a predetermined level of the same furnace, alone or after incorporating therein a portion of the recycle gas from the preliminary reducing furnace from which has been removed an oxidizable component. In this connection, if there is adopted a so-called two-stage injection in which the reducing gas is introduced into the preliminary reducing furnace dividedly from upper and lower portions of the same furnace, it will be possible to attain a more effective preliminary reduction. This two-stage injection method can be broadly classified into the following two.

According to the first two-stage injection method, a portion of the top gas (discharged gas) from the preliminary reducing furnace is recycled and, after removal of an oxidizable component from the recycle gas, the gas is mixed into the above reformed reducing gas; thus a reducing gas can be obtained which has been cooled and adjusted to appropriate temperature and degree of reduction.

The reducing gas thus obtained is divided in two; and one portion, along or after incorporation therein of methane at an appropriate ratio, is cooled to temperature and degree of reduction suitable for its injection from an upper part of the preliminary reducing furnace such as a shaft furnace and then introduced into the said upper part of the furnace.

The remaining portion of the reducing gas is mixed with a gaseous reducing agent such as methane and the recycle gas (oxidizable component contained therein may be removed) discharged from the preliminary reducing furnace at an appropriate ratio whereby it is cooled to an injection temperature and adjusted to a degree of oxidation both suitable for the reforming reaction at a lower part of the preliminary reducing furnace, and then the resulting gaseous mixture is introduced into the lower part of the furnace.

According to the second two-stage injection method, a portion of the gas discharged from the preliminary reducing furnace is recycled and, after removal of oxidizable components contained in the recycle gas, the gas is mixed into a portion of the above reformed reducing gas; then the reducing gas thus incorporating the recycle gas is cooled and adjusted to temperature and degree of reduction suitable for its injection from a upper part of the preliminary reducing furnace such as a shaft furnace, alone or by incorporating methane therein at an appropriate ratio, and thereafter it is introduced into the upper part of the preliminary reducing furnace.

On the other hand, the remaining portion of the reformed reducing gas is cooled and adjusted to an injection temperature and a degree of oxidation both suitable for the reforming reaction at a lower part of the preliminary reducing furnace by incorporating therein a gaseous reducing agent such as methane and a portion of the recycle gas (oxidizable component contained therein may be removed) discharged from the preliminary reducing furnace, at an appropriate ratio and then the resulting gaseous mixture is introduced into the lower part of the preliminary reducing furnace.

According to such two-stage injection method in the present invention, a reforming reaction which utilizes reduced iron ore is performed in the lower portion of the preliminary reducing furnace; the reducing gas rises to the upper portion of the same furnace while the degree of reduction is improved, and is mixed with the reducing gas introduced from the upper tuyere of the furnace. This mixed gas has a gas composition, or a degree of reduction, suitable for the reduction of iron ore, etc.

For the preliminary reduction, there is used a conventional shaft furnace (vertical type) or a fluidized bed furnace which permits the use of fine ore as feedstock. It is recommended that the percent metallization in the preliminary reduction be in the range of 70% to 96%, preferably not less than 85% on the average, in the shaft furnace (vertical furnace) type and in the range of 50% to 80%, preferably not less than 70% on the average, in the fluidized bed type.

As means for removing oxidizable components from the recycle gas discharged from the shaft furnace, there may be used known methods, e.g. $CO_2$ absorption method or adsorption method.

Further, by adding a slag forming agent, especially lime, into the melting furnace, to adjust the basicity of slag in the furnace to a value in the range of about 1.6 to 3.1, there can be attained an optimum desulfurization. If the operating pressure in the melting furnace is adjusted to a level in the range of 1.5 to 5.5 $kg/cm^2 \cdot G$, it is possible to fully exceed a flow resistance developed in the system, thus eliminating the need of a special provision for a reducing gas compressor.

The invention will be further illustrated by the figures and the examples.

Example 1

In Fig. 1, which shows an example of a process flow of the method of the present invention, the reference numeral 1 denotes a melt reducing furnace; numeral 2 denotes a pipe at an outlet portion of the body of the melt reducing furnace; numeral 3 denotes a preliminary reducing furnace (shaft furnace); numeral 3a denotes a reforming portion; numeral 3b denotes a reducing portion; numeral 4 denotes a heat exchanger; numeral 5 denotes a $CO_2$ scrubber; numeral 6 denotes a compressor. A high-temperature reducing gas "a" evolved in the melt reducing furnace 1 is mixed with methane "b" within the melting furnace outlet pipe 2 to to produce a controlled reducing gas "c" which has been cooled and controlled by the reforming reaction. On the other hand, a portion of a reducing gas "h" discharged from the shaft furnace 3 is cooled by the heat exchanger 4 and then introduced as a cooled gas "i" into the $CO_2$ scrubber 5, in which $CO_2$ is removed. The cooled gas may be pressurized before it is introduced into the $CO_2$ scrubber 5. Then the scrubbed gas is pressurized by the compressor 6 and mixed as a pressurized gas "d" with the gas "c" to obtain a mixed gas "e" to be introduced into the shaft furnace 3. The mixed gas "e" is in a cooled condition to a temperature suitable for its injection into the shaft furnace 3. In order to prevent the a.m. clustering, methane "g" is incorporated at an appropriate proportion (12.7% in this Example) into the mixed reducing gas "e" and the resulting gaseous mixture is introduced as a gas "f" into the shaft furnace 3.

Table 1 shows an example of a balance sheet based on the process flow; the values have been obtained by calculating the production of molten iron from the melting furnace in terms of 400,000 - 500,000 T/Y scale.

Table 1

| Total Flow Rate | a | b | c | d | e | f | g | h | i |
|---|---|---|---|---|---|---|---|---|---|
| Total Flow Rate (Kg · mol/h) | 2876 | 339 | 3437 | 1435 | 4072 | 5039 | 167 | 2004 | 2004 |
| MOL FRACTION $H_2O$ | 0.0790 | 0.0 | 0.0242 | 0.1626 | 0.0650 | 0.0620 | 0.0 | 0.1258 | 0.1258 |
| $CO$ | 0.6710 | 0.0 | 0.5843 | 0.3768 | 0.5231 | 0.5050 | 0.0 | 0.2697 | 0.2697 |
| $CO_2$ | 0.0690 | 0.0 | 0.0673 | 0.0 | 0.0475 | 0.0459 | 0.0 | 0.2746 | 0.2746 |
| $H_2$ | 0.1730 | 0.0 | 0.2513 | 0.2780 | 0.2594 | 0.2500 | 0.0 | 0.1995 | 0.1995 |
| $CH_4$ | 0.0 | 1.0000 | 0.0662 | 0.1715 | 0.0972 | 0.1271 | 1.0000 | 0.1228 | 0.1228 |
| $N_2$ | 0.0000 | 0.0 | 0.0067 | 0.0107 | 0.0079 | 0.0076 | 0.0 | 0.0077 | 0.0077 |
| $O_2$ | 0.0 | 0.0 | 0.0 | 0.0 | 0.0 | 0.0 | 0.0 | 0.0 | 0.0 |
| $C_2H_6$ | 0.0 | 0.0 | 0.0 | 0.0 | 0.0 | 0.0 | 0.0 | 0.0 | 0.0 |
| $C_3H_8$ | 0.0 | 0.0 | 0.0 | 0.0 | 0.0 | 0.0 | 0.0 | 0.0 | 0.0 |
| $C_4H_{10}$ | 0.0 | 0.0 | 0.0 | 0.0 | 0.0 | 0.0 | 0.0 | 0.0 | 0.0 |
| Temperature (°C) | 1609 | 557 | 1083 | 60 | 777 | 763 | 557 | 567 | 401 |
| Pressure (ATM-A.) | 3.42 | 3.42 | 3.30 | 3.50 | 3.30 | 3.30 | 3.42 | 2.82 | 2.60 |

The reducing gas at a high temperature (1,609 °C, 2,876 kg`mol/h) evolved from the melting furnace is contacted with methane (339 kg ml/h) in the melting furnace outlet portion and outlet pipe; thus the reforming reaction takes place. As a result, the sensible heat of the high-temperature reducing gas evolved in the melting furnace is utilized effectively; this cooling (1,609 °C →1,054 °C) of the high-temperature reducing gas is attained and also increase (0.26 → 0.43) of the $H_2/CO$ ratio, and it is possible to reduce or prevent the loss of heat, prevent the deterioration of the refractory in the melting furnace outlet portion and outlet pipe; and the clustering in the preliminary reducing furnace is prevented. A supplemental explanation will now be given about the prevention of clustering. Clustering is prevented by the improvement of the $H_2/CO$ ratio of the reducing gas introduced into the shaft furnace and by carbon coating of reduced iron with the added methane. The amount of methane required for preventing clustering in this example was 12.7% based on the amount of the reducing gas.

Methane is included in the reducing gas introduced into the shaft furnace and therefore in the reforming reaction performed by mixing of the high-temperature reducing gas "a" leaving the melting furnace with the heated methane "b", it is not necessary to consume the whole of methane in the reforming; rather it is desirable that the reaction will be performed partially. In this example the methane concentration had decreased from 10.5% (before reaction) to 6.7% (after reforming). This reforming reaction is performed by utilizing the heat the mixed gas possesses per se. Methane heated to 557 °C and the high-temperature reducing gas of 1,609 °C discharged from the melting furnace were mixed together and the temperature of the resulting gaseous mixture became 1,063 °C as the reforming reaction as an endothermic reaction proceeded.

It follows that the reducing gas temperature dropped by 546 °C under both the effect of the gas mixing and that of the reforming reaction. Further, by mixing the recycle gas from the shaft furnace into the reducing gas at a rate of 1,435 kg•mol/h, there can be made a control to an injection temperature (777 °C) suitable for the reduction of iron ore.

Further, in order to prevent clustering in the shaft furnace, methane was added at 557 °C, 167 kg•mol/h, whereby the temperature and composition of the gas at the shaft furnace tuyere were adjusted to values suitable for the reduction of iron ore, which were 763 °C and a reduction value R = 7.0, $[CH_4/(CO_2 + H_2O)] = 1.2$, respectively. Thus it is possible to effect the reduction to a satisfactory extent without clustering.

Example 2

Referring to Fig. 2, there is shown an example of a process flow relating to the two-stage injection method in the present invention, in which a high-temperature reducing gas "a" evolved in a melt reducing furnace 1 is mixed with methane "b" in a melt reducing furnace outlet pipe 2 and there is produced a controlled reducing gas "c" which has been cooled and controlled by a reforming reaction. On the other hand, a portion of a reducing gas "j" discharged from a shaft furnace 3 is cooled by a heat exchanger 4 and then introduced as a cooled gas "k" into a $CO_2$ scrubber 5 for the removal of $CO_2$. The cooled gas may be pressurized before it is introduced into the $CO_2$ scrubber 5. Further, the scrubbed gas is pressurized by a compressor 6 and then mixed as a pressurized gas "d" with the gas "c" to obtain a mixed gas "e" to be introduced into the shaft furnace 3. The mixed gas "e" is in a cooled condition to a temperature suitable for its injection into the shaft furnace 3. Then, the mixed reducing gas "e" is divided in two; methane "g" is added at an appropriate proportion to one $e_1$; thus it is obtained a reducing gas "f" which has been cooled and controlled to a temperature and a degree of reduction both suitable for the injection from an upper tuyere of the shaft furnace. Also to the remaining gas $e_2$ is added methane "h" at an appropriate proportion to obtain a reducing gas "i" which has been cooled and controlled to an injection temperature and a degree of reduction both suitable for the reforming reaction in a lower portion of the shaft furnace. As to the gas $e_1$, it is in some case introduced, alone without incorporation of methane, into the upper portion of the reducing furnace as the reducing gas "f".

Since the gas composition is rich in CO as previously noted, heat may be generated by a partial reducing reaction within the shaft furnace, thus causing clustering. In this example, in order to prevent such an inconvenience, methane is incorporated in the reducing gas and reduced iron is coated with deposited carbon.

Table 2 shows an example of a balance sheet based on the process flow of the method of the present invention, in which the values shown have been obtained by calculating the production of molten iron from the melting furnace in terms of 400,000 - 500,000 T/Y scale.

Table 2

| | | a | b | c | d | e | f | g | h | i | j | k |
|---|---|---|---|---|---|---|---|---|---|---|---|---|
| Tatal Flow Rate (kg·mol/h) | | 2876 | 339 | 3431 | 1714 | 5144 | 2124 | 87 | 100 | 3187 | 5567 | 2227 |
| MOL FRACTION | $H_2O$ | 0.0790 | 0.0 | 0.0243 | 0.1362 | 0.0616 | 0.0596 | 0.0 | 0.0 | 0.0596 | 0.1124 | 0.1124 |
| | $CO$ | 0.6710 | 0.0 | 0.5836 | 0.4219 | 0.5297 | 0.5131 | 0.0 | 0.0 | 0.5131 | 0.3246 | 0.3246 |
| | $CO_2$ | 0.0690 | 0.0 | 0.0683 | 0.0 | 0.0455 | 0.0441 | 0.0 | 0.0 | 0.0441 | 0.2229 | 0.2229 |
| | $H_2$ | 0.1730 | 0.0 | 0.2499 | 0.3434 | 0.2811 | 0.2722 | 0.0 | 0.0 | 0.2722 | 0.2643 | 0.2643 |
| | $CH_4$ | 0.0 | 1.0000 | 0.0672 | 0.0896 | 0.0747 | 0.1037 | 1.0000 | 1.0000 | 0.1037 | 0.0689 | 0.0689 |
| | $N_2$ | 0.0080 | 0.0 | 0.0067 | 0.0090 | 0.0075 | 0.0072 | 0.0 | 0.0 | 0.0072 | 0.0069 | 0.0069 |
| | $O_2$ | 0.0 | 0.0 | 0.0 | 0.0 | 0.0 | 0.0 | 0.0 | 0.0 | 0.0 | 0.0 | 0.0 |
| | $C_2H_6$ | 0.0 | 0.0 | 0.0 | 0.0 | 0.0 | 0.0 | 0.0 | 0.0 | 0.0 | 0.0 | 0.0 |
| | $C_3H_8$ | 0.0 | 0.0 | 0.0 | 0.0 | 0.0 | 0.0 | 0.0 | 0.0 | 0.0 | 0.0 | 0.0 |
| | $C_4H_{10}$ | 0.0 | 0.0 | 0.0 | 0.0 | 0.0 | 0.0 | 0.0 | 0.0 | 0.0 | 0.0 | 0.0 |
| Temperature (°C) | | 1596 | 541 | 1061 | 60 | 755 | 743 | 541 | 541 | 743 | 551 | 396 |
| Pressure (ATM-A.) | | 3.42 | 3.42 | 3.38 | 3.50 | 3.35 | 3.30 | 3.42 | 3.42 | 3.33 | 2.62 | 2.60 |

The reducing gas at a high temperature (1,596°C, 2,876 kg·mol/h) evolved from the melting furnace is contacted with methane (339 kg·mol/h) in the melting furnace outlet portion and outlet pipe; thus a reforming reaction takes place. As a result, the sensible heat of the high-temperature reducing gas evolved in the melting furnace is utilized effectively, whereby there are attained cooling (1,596°C →1,061°C) of the high-temperature reducing gas and increase (0.26 → 0.43) of the $H_2/CO$ ratio, and it is possible to reduce or prevent the loss of heat, prevent the deterioration of the refractory in the melting furnace outlet portion and outlet pipe, and prevent clustering in the preliminary reducing furnace. A supplemental explanation will now be given about the prevention of clustering. Clustering is prevented by the improvement of the $H_2/CO$ ratio of the reducing gas introduced into the shaft furnace and by the carbon coating of reduced iron with the added methane. The amount of methane required for preventing clustering in this example was about 10% based on the amount of the reducing gas.

As mentioned above, methane should be included in the reducing gas introduced into the shaft furnace and therefore in the reforming reaction performed by mixing of the high-temperature reducing gas "a" leaving the melting furnace with the heated methane "b", it is not necessary to consume the whole of methane in the reforming; rather it is desirable that the reaction will be performed partially. It become clear that in this example the methane concentration had decreased from 10.5% (before reaction) to 6.7% (after reforming). This reforming reaction is performed by utilizing the heat which the mixed gas per se possesses. In this example, methane (339 kg•mol/h) heated to 541 °C and the high-temperature reducing gas (2,876 kg•mol/h) of 1,596 °C discharged from the melting furnace were mixed together and the temperature of the resulting gaseous mixture became 1.061 °C as the reforming reaction as an endothermic reaction proceeded.

It follows that the reducing gas temperature dropped by 535 °C under both the effect of the gas mixing and that of the reforming reaction. Further, by mixing the recycle gas from the shaft furnace into the reducing gas at a rate of 1,714kg•mol/h, there can be made a control to an injection temperature (775 °C) suitable for the reduction of iron ore.

Further, in order to prevent clustering in the shaft furnace, methane was added at a rate of 67 kg•mol/h to a portion of the reducing gas "e" controlled to 755 °C, i.e. the reducing gas $e_1$ (2,058 kg•mol/h) to be introduced to an upper tuyere of the shaft furnace, whereby the temperature and composition of the gas at the shaft furnace tuyere were adjusted to values suitable for the reduction of iron ore, which were 734 °C and a reduction degree R value $[(CO + H_2)/(CO_2 + H_2O)] = 7.6$, respectively. Now it became possible to effect the reduction to a satisfactory extent without clustering.

Methane is added (100 kg•mol/h) also to the branched, remaining reducing gas $e_2$ and the resulting mixture is introduced into a lower tuyere of the shaft furnace. This injection gas has a temperature of 743 °C suitable for the injection and it is of a composition $[CH_4/(CO_2 + H_2O) = 1.0]$ suitable for inducing a partial reforming reaction within the shaft furnace. While this gas is introduced from the lower tuyere of the shaft furnace and rises to the upper portion, there occurs a reforming reaction. According to this example, in the vicinity of the upper tuyere of the shaft furnace the methane concentration decreased from 10.4% to 6.5%. Consequently the reduction degree R value improved from 7.6 to 13.4 ; and there is obtained a gas composition effective for the reduction of iron ore at the upper portion of the shaft furnace. This reformed gas rises through the interior of the shaft furnace and joins the gas "f" of R value 7.6 introduced from the upper tuyere; it has an R value of 10.5 and a composition suitable for the reduction of iron ore. Also in the upper portion it is possible to obtain a normally reduced iron ore without clustering.

Example 3

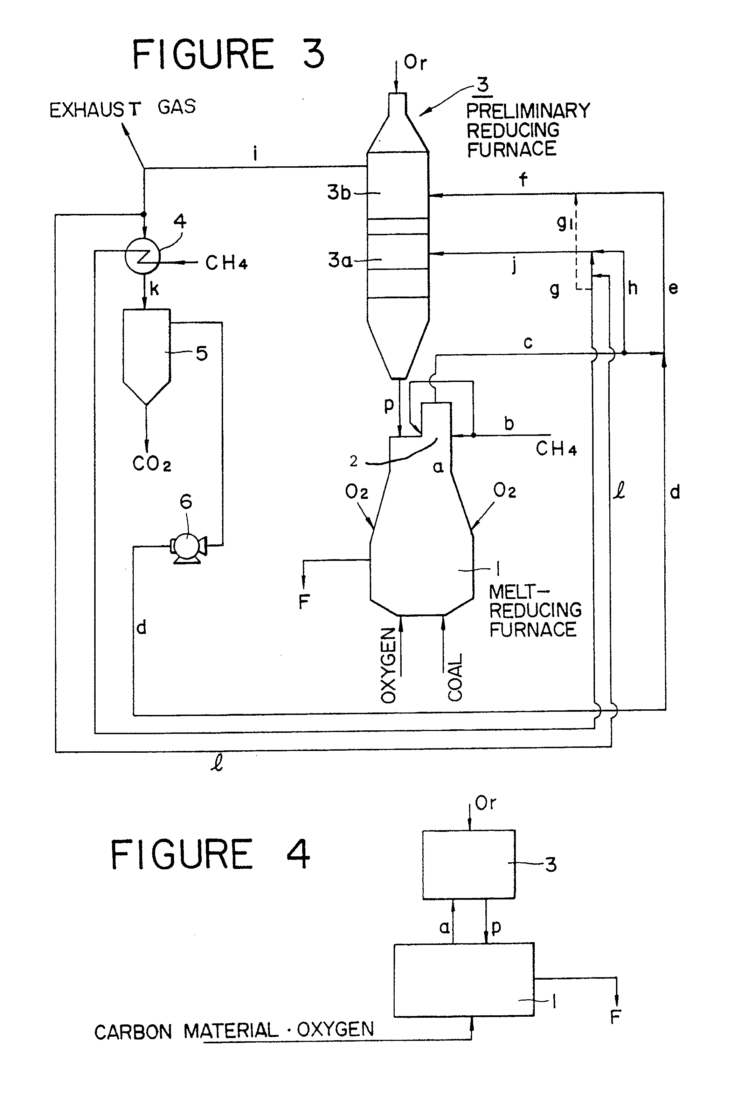

Referring to Fig. 3, there is shown a further example of a process flow relating to the two-stage injection method in the present invention, in which a high-temperature reducing gas "a" evolved in a melt reducing furnace 1 is mixed with methane "b" in a melt reducing furnace outlet pipe 2 and there is produced a controlled reducing gas (corresponding to a reformed gas) which has been cooled and controlled by a reforming reaction. On the other hand, a portion of a reducing gas "i" discharged from a shaft furnace 3 is cooled by a heat exchanger 4 and then introduced as a cooled gas "k" into a $CO_2$ scrubber 5 for the removal of $CO_2$. The cooled gas may be pressurized before it is introduced into the $CO_2$ scrubber 5. Further, the scrubbed gas is pressurized by a compressor 6 and then mixed as a pressurized gas "d" with a portion of the gas "c" to obtain a mixed gas "e" to be introduced into the shaft furnace 3. The mixed gas "e" is in a cooled condition to a temperature suitable for its injection into the shaft furnace 3. If necessary, methane $g_1$ may be additionally blended into the mixed gas. In this way there is obtained a reducing gas "f" which has been cooled and controlled to a temperature and a degree of reduction both suitable for the injection from the upper tuyere of the shaft furnace. On the other hand, methane "g" is also added at an appropriate proportion to the remaining portion "h" of the controlled reducing gas "c", and further added is a portion of the recycle gas "i", whereby there is obtained a reducing gas "j" which has been cooled and controlled to an injection temperature and a degree of reduction both suitable for the reforming reaction in the lower portion of the shaft furnace.

Since the gas composition is rich in CO as previously noted, heat may be generated by a partial reducing reaction within the shaft furnace, thus effecting clustering. In this example, in order to prevent such an inconvenience, methane is incorporated in the reducing gas and reduced iron is coated with deposited carbon.

Table 3 shows an example of a balance sheet based on the process flow of the method of the present invention, in which the values shown have been obtained by calculating the production of molten iron from the melting furnace in terms of 400,000 - 500,000 T/Y scale.

Table 3

| | | a | b | c | d | e | f | g | h | i | j |
|---|---|---|---|---|---|---|---|---|---|---|---|
| Total Flow Rate (kg.mol/h) | | 2876 | 339 | 3434 | 1101 | 3162 | 3162 | 167 | 1374 | 6021 | 2504 |
| MOL FRACTION | $H_2O$ | 0.0790 | 0.0 | 0.0243 | 0.1376 | 0.0637 | 0.0673 | 0.0 | 0.0243 | 0.1127 | 0.0567 |
| | $CO$ | 0.6710 | 0.0 | 0.5040 | 0.4406 | 0.5341 | 0.5341 | 0.0 | 0.5040 | 0.3358 | 0.4496 |
| | $CO_2$ | 0.0690 | 0.0 | 0.0677 | 0.0 | 0.0441 | 0.0441 | 0.0 | 0.0677 | 0.2302 | 0.1257 |
| | $H_2$ | 0.1730 | 0.0 | 0.2500 | 0.3404 | 0.2840 | 0.2848 | 0.0 | 0.2508 | 0.2655 | 0.2397 |
| | $CH_4$ | 0.0 | 1.0000 | 0.0666 | 0.0650 | 0.0661 | 0.0661 | 1.0000 | 0.0666 | 0.0496 | 0.1222 |
| | $N_2$ | 0.0080 | 0.0 | 0.0067 | 0.0084 | 0.0073 | 0.0073 | 0.0 | 0.0067 | 0.0064 | 0.0061 |
| | $O_2$ | 0.0 | 0.0 | 0.0 | 0.0 | 0.0 | 0.0 | 0.0 | 0.0 | 0.0 | 0.0 |
| | $C_2H_6$ | 0.0 | 0.0 | 0.0 | 0.0 | 0.0 | 0.0 | 0.0 | 0.0 | 0.0 | 0.0 |
| | $C_3H_8$ | 0.0 | 0.0 | 0.0 | 0.0 | 0.0 | 0.0 | 0.0 | 0.0 | 0.0 | 0.0 |
| | $C_4H_n$ | 0.0 | 0.0 | 0.0 | 0.0 | 0.0 | 0.0 | 0.0 | 0.0 | 0.0 | 0.0 |
| Temperature (°C) | | 1596 | 500 | 1062 | 60 | 743 | 743 | 580 | 1062 | 590 | 830 |
| Pressure (ATM-A.) | | 3.42 | 3.42 | 3.38 | 3.50 | 3.35 | 3.30 | 3.33 | 3.33 | 2.62 | 3.33 |

The reducing gas at a high temperature (1,596° C, 2,876 kg•mol/h) evolved from the melting furnace is contacted with methane (339 kg•mol/h) in the melting furnace outlet portion and outlet pipe; thus a reforming reaction takes place. As a result, the sensible heat of the high-temperature reducing gas evolved in the melting furnace is utilized effectively; there are attained cooling (1,596° C → 1,062° C) of the high-temperature reducing gas and increase (0.26 → 0.43) of the $H_2/CO$ ratio, and it is possible to reduce or prevent the loss of heat, prevent the deterioration of the refractory in the melting furnace outlet portion and outlet pipe, and prevent clustering in the preliminary reducing furnace. The prevention of clustering will now be explained supplementally. Clustering is prevented by the improvement of the $H_2/CO$ ratio of the reducing gas introduced into the shaft furnace and by carbon coating of reduced iron with the added methane. The amount of methane required for preventing clustering in this example was about 6.6% based on the amount of the reducing gas.

As mentioned above, methane should be incorporated in the reducing gas introduced into the shaft furnace and therefore in the reforming reaction performed by mixing of the high-temperature reducing gas "a" leaving the melting furnace with the heated methane "b", it is not necessary to consume the whole of methane in the reforming; rather it is desirable that the reaction will be performed partially. This reforming reaction is conducted by utilizing the heat which the mixed gas per se possesses. In this example, methane (339 kg•mol/h) heated to 580° C and the high-temperature reducing gas (2,876 kg•mol/h) of 1,596° C discharged from the melting furnace were mixed together and the temperature of the resulting gaseous mixture became 1,062° C as the reforming reaction as an endothermic reaction proceeded.

The reducing gas temperature dropped by 534° C under both the effect of the gas mixing and that of the reforming reaction. Further, by mixing the recycle gas "d" from the shaft furnace into a portion of the gas "c" thus obtained, at a rate of 1,101 kg•mol/h, there can be made a control to an injection temperature (743° C) and a reduction degree R value $[(CO + H_2)/(CO_2 + H_2O)] = 7.6$ both suitable for the reduction of iron ore. This reducing gas "f" is introduced for reduction into an upper portion 3b of the shaft furnace 3.

A portion (1,374 kg•mol/h) of the remaining, branched, controlled reducing gas $c_1$ (1,062° C) is mixed with the gas "i" (936 kg•mol/h) discharged from the shaft furnace 3; further added is methane (167 kg•mol/h) preheated to 580° C; then the resulting gaseous mixture is conducted to the tuyere of a shaft furnace lower portion 3a. This injection gas "j" has a temperature of 830° C (2,504 kg•mol/h) which is suitable for the injection; it is of a composition $[CH_4/(CO_2 + H_2O) = 0.67]$ suitable for inducing a partial reforming reaction within the shaft furnace. While this gas is introduced from the lower tuyere of the shaft furnace and rises to the upper portion, there occurs a reforming reaction. In the vicinity of the tuyere of the shaft furnace upper portion the reduction degree R value and the methane concentration became 9.0 and 4.3%, respectively. Then, the gas joins the gas "f" of R value 7.6 introduced from the upper tuyere; as a result, the R value and the methane concentration become 8.2 and 5.5%, respectively; there is obtained a gas composition suitable for the reduction of iron ore. Thus, also in the upper portion it became possible to obtain a normally reduced iron ore without the occurrence of clustering.

The reducing gas evolved can be improved to give a gas having temperature and composition suitable for the preliminary reduction; it is possible to improve the operation course of the direct iron making process and perform the reducing reaction in stable and efficient form, and the clustering in furnace 3 is eliminated.

The drawings are as follows:

Figs. 1 to 3 show examples of process flows

Fig. 4 is an explanatory view showing a process principle of the direct iron making process. ref. num.1 is the melt reducing furnace; 3 is the preliminary reducing furnace (shaft furnace)

## Claims

**1.** Method of producing pig iron by melt reducing of iron ore, comprising

a. subjecting an iron oxide feedstock in a solid state to a preliminary reduction in a preliminary reducing furnace using a reducing gas which is introduced from a melt-reducing furnace,

b. supplying the iron oxide feedstock after the preliminary reduction to the melt-reducing furnace and melt-reducing it in the presence of a reducing agent,

c. subjecting the reducing gas evolved in the melt-reducing furnace to the action of a gaseous oxidizing agent to allow to burn in the vicinity of an upper surface of the molten iron,

d. subjecting the reducing gas at a high temperature discharged from the melt-reducing furnace to the action of a gaseous reducing agent at a high temperature to allow a partial reforming reaction to take place,
e. introducing the resulting reformed gas into the preliminary reducing furnace,

wherein step d. uses methane as the gaseous reducing agent

and the concentration of unreacted methane in the reformed gas obtained by the partial reforming reaction under action of methane is held at a value in the range of 2% to 13%.

## Revendications

1. Procédé de production de fonte brute par réduction à l'état fondu d'un minerai de fer, selon lequel
a. on soumet une charge d'oxyde de fer, à l'état solide, à une réduction préliminaire dans un four de réduction préliminaire dans lequel on introduit un gaz réducteur qui provient d'un four de réduction à l'état fondu,
b. après la réduction préliminaire, on alimente le four de réduction à l'état fondu en charge d'oxyde de fer que l'on y réduit à l'état fondu en présence d'un agent réducteur,
c. on soumet le gaz réducteur qui s'échappe du four de réduction à l'état fondu à l'action d'un agent oxydant gazeux pour permettre la combustion au voisinage de la surface supérieure du fer fondu,
d. on soumet le gaz réducteur à haute température et déchargé du four de réduction à l'état fondu, à l'action d'un agent réducteur gazeux, à température élevée, pour permettre le déroulement d'une réaction de reformage partiel,
e. on introduit le gaz reformé ainsi obtenu dans le four de réduction préliminaire,

caractérisé en ce que l'on utilise du méthane à titre d'agent réducteur gazeux dans l'étape d. et on maintient la concentration en méthane entré en réaction dans le gaz reformé obtenu par la réaction de reformage partiel sous l'effet du méthane, à une valeur qui fluctue de 2% à 13%.

## Ansprüche

1. Verfahren zur Herstellung von Roheisen durch Schmelzreduktion von Eisenerz, wobei man
a) ein Eisenoxid-Einsatzmaterial im festen Zustand einer Vorreduktion in einem Vorreduktionsofen unter Verwendung eines Reduktionsgases, das aus einem Schmelzreduktionsofen eingeleitet wird, unterwirft;
b) das Eisenoxid-Einsatzmaterial nach der Vorreduktion dem Schmelzreduktionsofen zuführt und es in Gegenwart eines Reduktionsmittels schmelzreduziert;
c) das Reduziergas, welches im Schmelzreduktionsofen entwickelt ist, der Einwirkung eines gasförmigen Oxidationsmittels unterwirft zur Erzielung von Abbrennen in der Nähe der oberen Fläche des geschmolzenen Eisens;
d) das Reduziergas, bei hoher Temperatur ausgetreten aus dem Schmelzreduktionsofen, der Einwirkung eines gasförmigen Reduktionsmittels bei hoher Temperatur unterwirft zur Erzielung einer teilweisen Reformierreaktion;
e) das resultierende reformierte Gas in den Vorreduktionsofen einführt,

wobei in Stufe d) Methan als gasförmiges Reduktionsmittel eingesetzt wird

und die Konzentration von nicht-umgesetztem Methan im reformierten Gas, erhalten durch die teilweise Reformierreaktion unter der Einwirkung von Methan, bei einem Wert im Bereich von 2 % bis 13 % gehalten wird.

FIGURE I

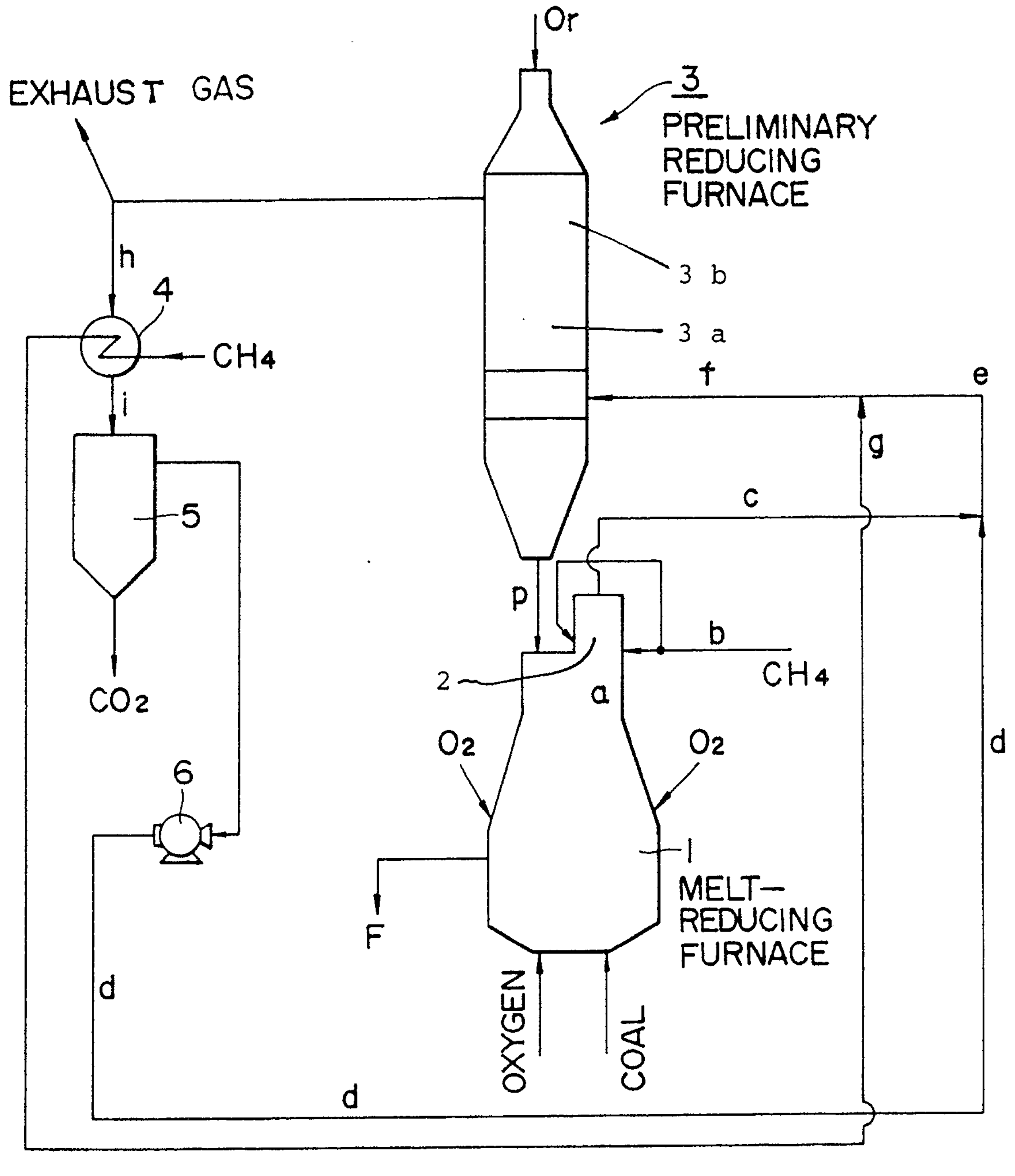
Or
EXHAUST GAS
3
PRELIMINARY
REDUCING
FURNACE
3 b
3 a
h
4
CH4
f
e
g
i
c
5
p
b
CH4
2
a
CO2
O2
O2
d
6
1
MELT-
REDUCING
FURNACE
F
d
OXYGEN
COAL
d

FIGURE 2

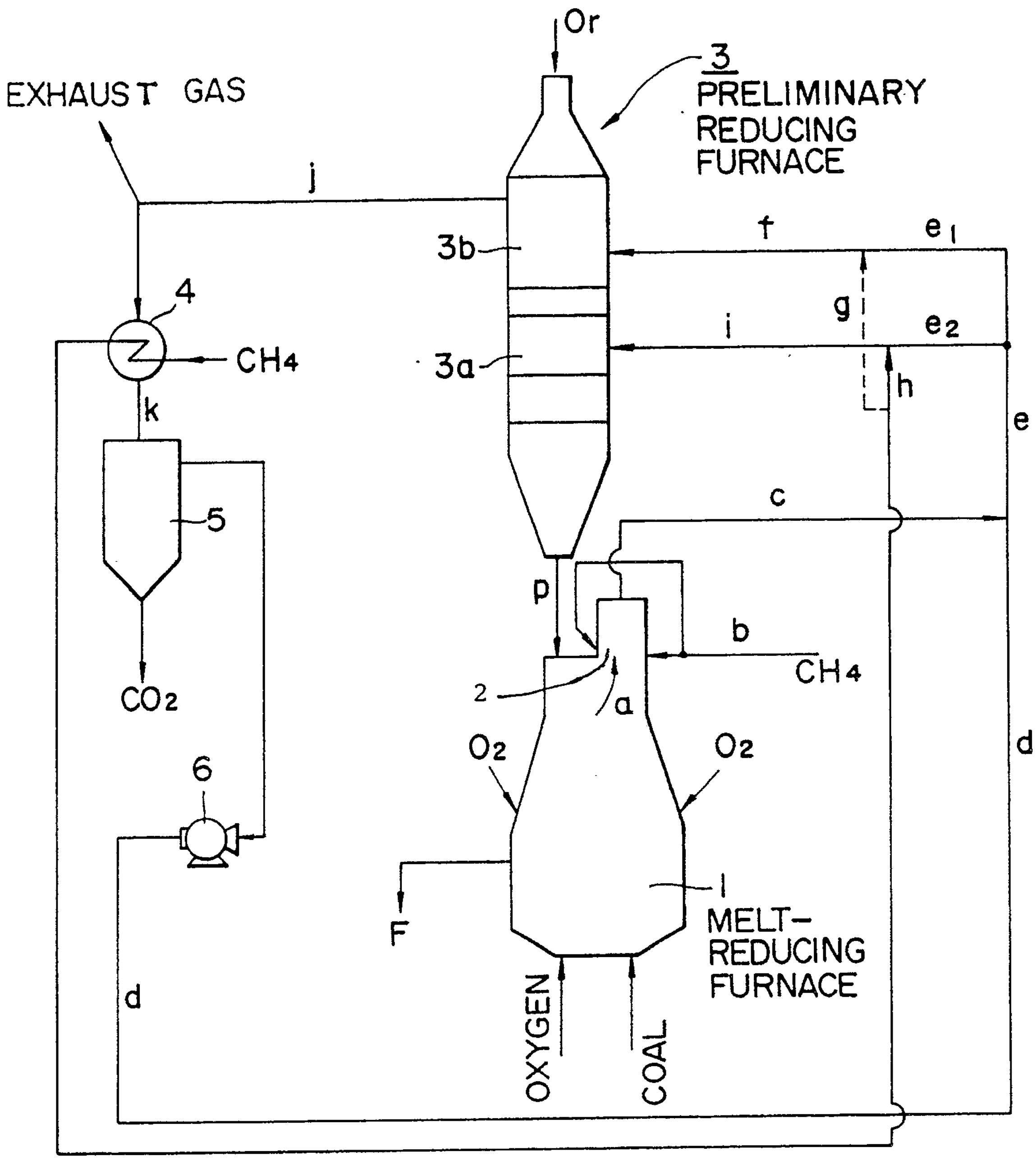
Or
3
PRELIMINARY
REDUCING
FURNACE
EXHAUST GAS
j
3b
f
e1
g
4
i
e2
CH4
3a
h
k
e
5
c
p
b
CH4
CO2
2
a
O2
O2
d
6
1
F
MELT-
REDUCING
FURNACE
d
OXYGEN
COAL

FIGURE 3

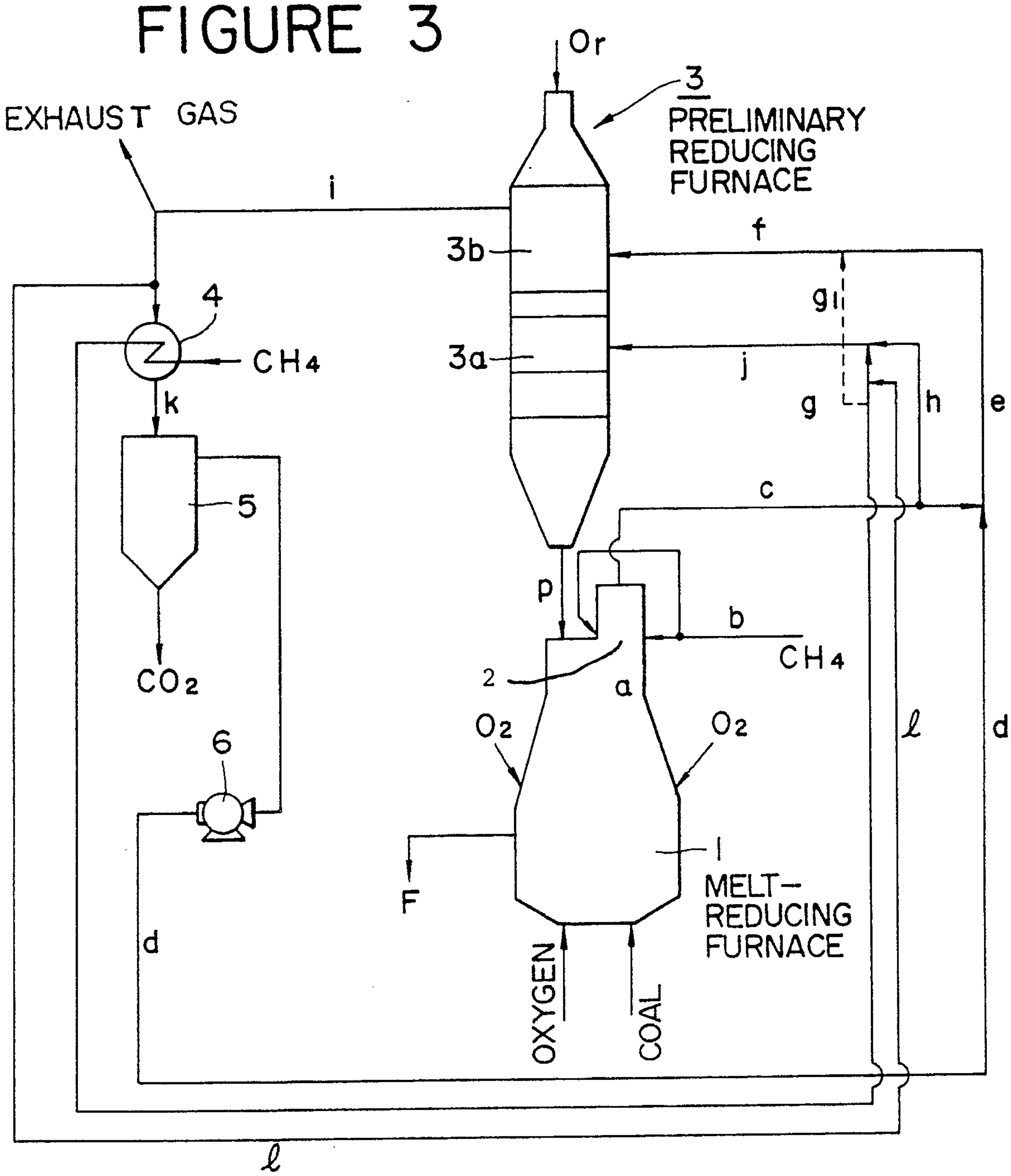


FIGURE 4